(19) Europäisches Patentamt
European Patent Office
Office européen des brevets

(11) EP 1 874 028 A1

(12) **EUROPEAN PATENT APPLICATION**

(43) Date of publication:
**02.01.2008 Bulletin 2008/01**

(51) Int Cl.:
*H04N 1/113* (2006.01)  *G02B 26/12* (2006.01)

(21) Application number: **07109535.0**

(22) Date of filing: **04.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **29.06.2006 KR 20060059877**

(71) Applicant: **Samsung Electronics Co., Ltd.**
**Suwon-si, Gyeonggi-Do (KR)**

(72) Inventor: **Ku, Jong-wuk**
**, Jugong Greenvill Apt. 301-1506**
**Gyeonggi-do (KR)**

(74) Representative: **Clark, Charles Robert et al**
**Venner Shipley LLP**
**20 Little Britain**
**London EC1A 7DH (GB)**

(54) **Scanning unit for an image forming apparatus**

(57) A laser scanning unit including a polygon mirror which has a plurality of reflecting faces reflecting an incident light onto a predetermined image forming part and is rotatably operated, a first light source scanning a first laser onto the reflecting faces at a predetermined scanning angle with respect to a centring line connecting a rotating axial line of the polygon mirror with a predetermined reference position on the image forming part, a second light source scanning a second laser symmetrical with the first laser with respect to the centring line onto the reflecting faces, a first F-θ lens which is positioned on the first optical path between the image forming part and the polygon mirror, and a second F-θ lens which is positioned on the second optical path between the image forming part and the polygon mirror, and has an optical characteristic symmetrical with the first Fθ with respect to the centring line.

FIG. 2

EP 1 874 028 A1

**Description**

The present general inventive concept relates to a scanning unit and an image forming apparatus comprising such a unit. More particularly, but not exclusively, the present invention relates to a multi-beam type laser scanning unit with reduced size and reduced manufacturing cost, and an image forming apparatus including the laser scanning unit.

In general, a laser scanning unit (LSU) scans a laser beam onto a surface of a photosensitive body to form an electrostatic latent image in an electrophotographic image forming apparatus such as a laser printer, a copier and the like. Typically there is a single-beam type laser scanning unit using a single laser light source. However, a multi-beam type laser scanning unit is known to use a plurality of laser sources corresponding to a plurality of colors which can be scanned at the same time in a colored image forming apparatus.

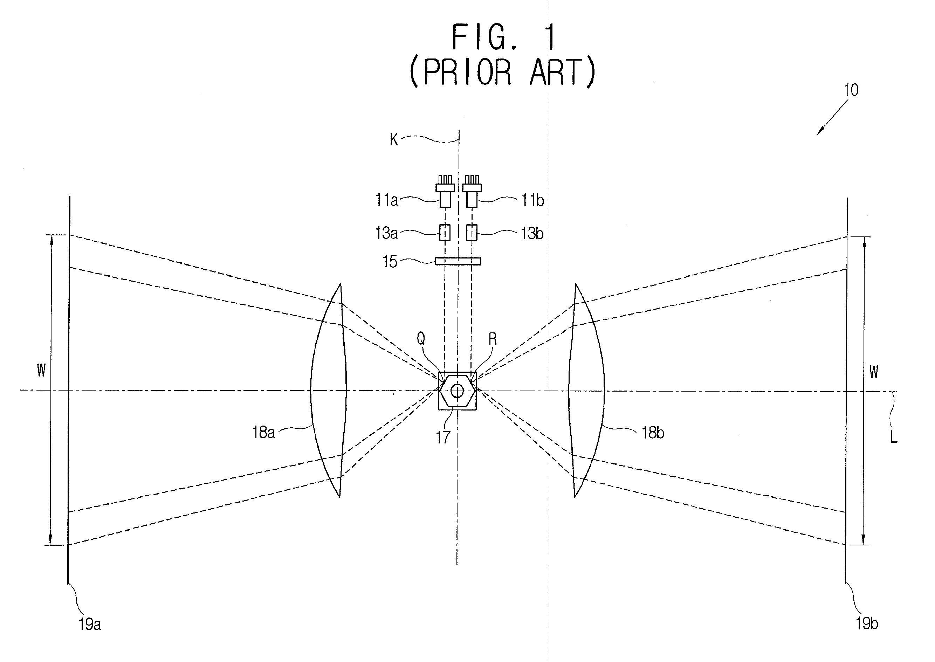

As shown in Figure 1, a laser scanning unit 10 having the conventional multi-beam type contains a polygon mirror 17 which rotates at a uniform speed and reflects light, and a plurality of photosensitive bodies 19a and 19b positioned opposite each other across the polygon mirror 17. Between the polygon mirror 17 and the photosensitive bodies 19a and 19b are positioned F-θ lenses 18a and 18b, respectively, that form an image from the light reflected by the polygon mirror 17 onto the surfaces of the photosensitive bodies 19a and 19b, respectively. The two F-θ lenses 18a and 18b can be aspherical and have the same shape. A first light source 11a and a second light source 11b each scan a laser light beam symmetrically with respect to a line K that passes a rotation centre of the polygon mirror 17 and that is parallel to the plane of the photosensitive bodies 19a and 19b (refer to Figure 1). Further, the scanned laser light beams pass through collimating lenses 13a and 13b and a cylindrical lens 15 on their respective optical paths, and are then concentrated into a linear beam. The concentrated beam is reflected by the polygon mirror 17, refracted by the respective F-θ lenses 18a and 18b and then scanned onto the surfaces of the photosensitive bodies 19a and 19b in a predetermined range (See W in Figure 1).

However, the conventional laser scanning unit 10 is configured such that the light sources 11a and 11b are symmetrically positioned with respect to the line K in Figure 1. Accordingly, because the photosensitive bodies 19a and 19b must be positioned to be symmetrical with each other and with respect to the line K, more space is used than may be necessary. For example, when the light sources 11a and 11b and the photosensitive bodies 19a and 19b are positioned to one side, the laser scanning unit 10 and the image forming apparatus can be more compactly arranged.

As an example, it may be assumed that the light sources 11a and 11b are positioned to be symmetrical to each other with respect to an arbitrary line L in place of the line K in Figure 1 in an attempt to improve its efficiency of space.

However, in the case that the light sources 11a and 11b are positioned as in the above-described method, the laser scanning range in the main scanning direction (a transverse direction of a printing paper) on the respective surfaces of the photosensitive bodies 19a and 19b become misaligned with each other. That is, opposite ends of the laser scanning range formed in a photosensitive body 19a are misaligned with those of the laser scanning range formed in the photosensitive body 19b. Electrostatic latent image areas formed in the respective photosensitive bodies 19a and 19b become misaligned with each other when the scanning ranges are misaligned. In particular, in the case of a colored image obtained by mixing the electrostatic latent images corresponding to predetermined colors, the formed colored image may be distorted and may not have the user-desired color.

Accordingly, the F-θ lenses corresponding to the light sources 11a and 11b should be designed to prevent such distortion. Therefore, the F-θ lenses 19a and 19b, which are of the same shape, as shown in Figure 1, can not be used, thereby increasing the manufacturing cost of the laser scanning unit 10.

The present general inventive concept aims to provide a multi-beam type laser scanning unit that has an enhanced spatial arrangement and reduced manufacturing costs (compared to known systems), and an image forming apparatus including the same.

The foregoing and other aspects and utilities of the general inventive concept are achieved by providing a laser scanning unit containing, a rotatably operatable polygon mirror with a plurality of reflecting faces to reflect an incident light onto an image forming part, a first light source to scan a first laser onto the reflecting faces at a predetermined scanning angle with respect to a centre line that passes through a rotating axial line of the polygon mirror and a predetermined reference position on the image forming part, a second light source to scan a second laser onto the reflecting faces, the second laser being symmetrical to the first laser with respect to the centre, a first F-θ lens positioned on a first optical path of the first laser between the image forming part and the polygon mirror, and a second F-θ lens positioned on a second optical path of the second laser between the image forming part and the polygon mirror, the second F-θ lens having an optical characteristic symmetrical to the first F-θ lens with respect to the centre line.

Each scanning angle of the first laser and the second laser can be an acute angle.

The first laser and the second laser can be scanned onto a target position on the centre line shifted at a predetermined distance from the rotating axial line toward the image forming part.

The first F-θ lens and the second F-θ lens can be shifted a predetermined offset amount along a main scanning direction from the centre line.

The first laser and the second laser can be displaced from each other along a direction of the rotating axial line and scanned onto the reflecting faces.

The laser scanning unit may further contain an additional light source which is symmetrical with at least one of the first laser and the second laser with respect to the centre line and scans at least one additional laser onto the reflecting faces, the additional light source being spaced from the at least one of the first laser and second laser along the rotating axial line, and an additional F-θ lens which is positioned on an additional optical path between the image forming part and the polygon mirror, the additional F-θ lens has an optical characteristic symmetrical with at least one of the F-θ lens.

The predetermined offset amount H can be within the range of the following formula:

$$2d\tan(\theta) \le H \le 2r\sin\left(\frac{180}{n}\right)$$

where, "d" indicates a perpendicular distance between the lens centre and the image forming part, "θ" indicates a space angle between a line connecting a lens centre with the reference position and the centre line, "r" indicates an inscribed circle radius of the reflecting faces of the polygon mirror, and "n" indicates a number of the reflecting faces of the polygon mirror.

The laser scanning unit may further contain an additional light source symmetrically positioned to at least one of the first light source and the second light source with respect to a centre cross line which passes through the rotating axial line and is at a right angle to the centre line, and an additional F-θ lens positioned between the polygon mirror and another image forming part, the another image forming part being symmetrically positioned with the image forming part with respect to the centre cross line, and the additional F-θ lens being arranged to be symmetrical with at least one of the first F-θ lens and the second F-θ lens with respect to the centre cross line.

The foregoing and other aspects and utilities of the general inventive concept are also achieved by providing an image forming apparatus containing, an image forming part, a rotatably operatable polygon mirror with a plurality of reflecting faces to reflect an incident laser, a first light source to scan a first laser onto the reflecting faces at a predetermined scanning angle with respect to a centre line that connects a rotating axial line of the polygon mirror with a predetermined reference position of the image forming part, a second light source to scan a second laser onto the reflecting faces, the second laser being symmetrical to the first laser with respect to the centre line, a first F-θ☐ lens positioned on a first optical path of the first laser between the image forming part and the polygon mirror, and a second F-θ lens positioned on a second optical path between the image forming part and the polygon mirror, the second F-θ lens having an optical characteristic that is symmetrical with the first F-θ lens with respect to the centre line.

The first laser and the second laser can be scanned onto a target position which is shifted a predetermined distance from the axial line to the image forming part along the centre line.

The first F-θ lens and the second F-θ lens can be shifted a predetermined offset amount along a main scanning distance from the centre line.

The predetermined offset amount H is within the range of the following formula:

$$2d\tan(\theta) \le H \le 2r\sin\left(\frac{180}{n}\right)$$

where, "d" indicates a perpendicular distance between the lens centre and the image forming part, "θ" indicates an angle between a line connecting a lens centre with the reference position and the centre line, "r" indicates an inscribed circle radius of the reflecting faces of the polygon mirror, and "n" indicates the number of a reflecting faces of the polygon mirror.

The image forming apparatus may further contain another image forming part positioned to be symmetrical with the image forming part with respect to a cross line which passes through the rotating axial line and is at a right angle to the centre line, another light source positioned to be symmetrical with at least one of the first light source and the second light source with respect to the centre cross line, and another F-θ lens positioned between the another image forming part and the polygon mirror, and symmetrical with at least one of the first F-θ lens and the second F-θ lens with respect to the centre cross line.

The foregoing and other aspects and utilities of the general inventive concept are also achieved by providing a laser scanning unit including a rotatable polygon mirror with a plurality of reflecting faces to reflect an incident light onto at least one image forming part, at least one pair of light sources each corresponding to a respective image forming part to scan a pair of lasers onto the reflecting faces symmetrically to each other with respect to a centre line extending between a rotating axial line of the polygon mirror and a predetermined reference position on a respective one of the image forming parts, and a pair of F-θ lenses corresponding to each pair of light sources, each F-θ lens being disposed along an optical path of a corresponding laser of the pair of lasers between the corresponding respective image forming part and the polygon mirror.

Each pair of F-θ lenses are shifted a predetermined offset amount along a main scanning direction from the centre line.

The at least one pair of light sources comprises two pairs of light sources, the first pair of light sources being disposed symmetrically to the second pair with respect to a line extending perpendicular to the centre line, and the pair of F-θ lenses comprises two pairs of pair of F-θ lenses, each pair corresponding with a respective pair of light sources.

Embodiments of the present invention are now described, by way of example and with reference to the accompanying drawings of which:

Figure 1 is a plane view illustrating a laser scanning unit of a conventional multi-beam type;

Figure 2 is a plane view of a laser scanning unit according to an embodiment of the present general inventive concept;

Figure 3 is a plane view illustrating a configuration of a F-θ□ lens of the laser scanning unit in Figure 2;

Figure 4 is a partial enlarged view of the laser scanning unit in Figure 2;

Figure 5 is a perspective view of another laser scanning unit according to an embodiment of the present general inventive concept;

Figure 6 is a plane view of the laser scanning unit in Figure 5; and

Figure 7 is a sectional view of an image forming apparatus according to another embodiment of the present general inventive concept.

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

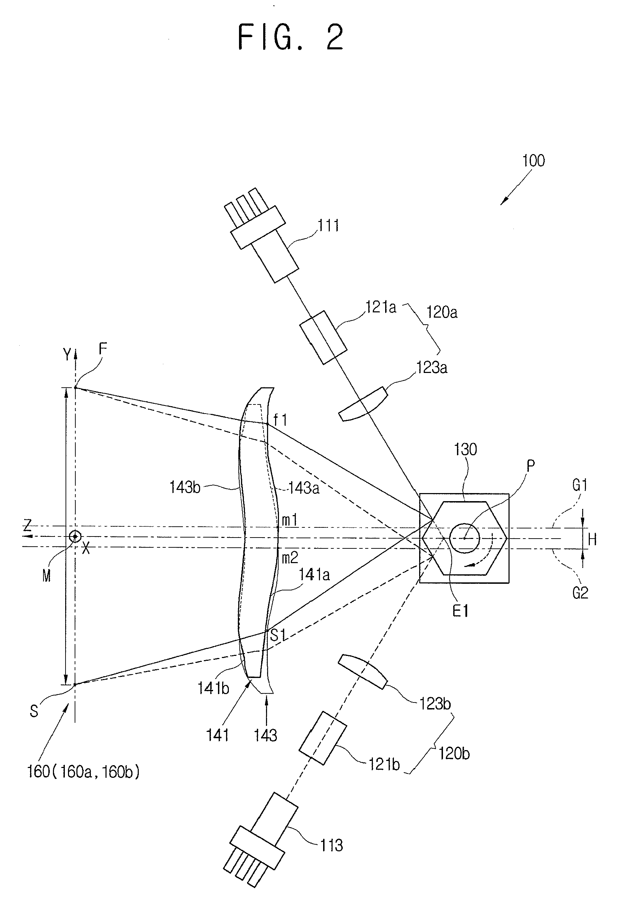

As shown in Figure 2, in a laser scanning unit 100 according to an embodiment of the present general inventive concept, a first laser (see solid line in Figure 2) and a second laser (see dotted line in Figure 2) are scanned symmetrically to each other with respect to an arbitrary centre line (see Z axis in Figure 2) from a first light source 111 and a second light source 113, respectively, and the first laser and the second laser pass through optical lens 120a and 120b, respectively, provided on the respective optical paths to be converted into a linear-type laser of a sub scanning direction (a lengthwise direction of a printing paper). The converted lasers are reflected from reflecting faces of a polygon mirror 130 rotating at a uniform speed, to a first F-θ lens 141 and a second F-θ lens 143, respectively. The first F-θ lens 141 and the second F-θ lens 143 focus the incident laser in a main scanning direction and respectively expose surfaces of image forming parts 160a and 160b to form an electrostatic latent image within a predetermined scanning range (see S to F in Figure 2).

As shown in Figure 2, the image forming part 160 is provided as a plurality of photosensitive bodies 160a and 160b in which electrostatic latent images are formed by the light sources 111 and 113. The image forming part 160 may be provided as a photosensitive body in the case that a laser is scanned onto different surfaces of the photosensitive bodies 160a and 160b. As necessary, the image forming part 160 may contain a reflection mirror capable of changing an optical path toward a photosensitive body placed in a predetermined position.

The first light source 111 and the second light source 113 scan their respective lasers onto the reflecting surfaces of the polygon mirror 130 symmetrically with each other at a predetermined scanning angle with respect to the centre line (Z axis in Figure 2). Here, the centre line (Z axis) connects a rotating axial line (perpendicular to the direction of the plane of Figure 2 and at point P) of the polygon mirror 130 with a reference position (See M in Figure 2) of the image forming part 160. The reference position may be arbitrarily set, but it is desirable to have it set as a centre point (M in Figure 2) of a range in which the laser is scanned in the main scanning direction. This arrangement can help to minimize an unnecessary area in which an electrostatic latent image is not formed in the image forming part 160.

The first light source 111 and the second light source 113 are preferably, but not necessarily, positioned to scan the laser at an acute angle with respect to the centre line (Z axis). Also, they may be positioned to scan the laser at a right angle or an obtuse angle with respect to the centre line (Z axis), as necessary.

The first light source 111 and the second light source 113 scan the laser onto a target position (E1) that is shifted from the rotating axial line (point P) of the polygon mirror 130 to the image forming part 160 by a predetermined distance. Here, the target position (E1) is located on the centre line (Z axis), and may be adjusted within a range in which the laser scanned by the plurality of light sources 111 and 113 can be reflected by the reflecting faces of the polygon mirror 130.

The first light source 111 and the second light source 113 are provided as laser diodes, however LEDs or other known radiating elements may be used and the invention is not limited to the use of lasers. The first light source 111 and the second light source 113 may be oriented in the direction of the rotating axial line (point P) of the polygon mirror 130 in consideration of space efficiency to scan the laser onto reflecting faces of the polygon mirror 130.

The first light source 111 and the second light source 113 can operate simultaneously to scan a first laser and a second laser by a controller (not shown). Alternatively, after a predetermined time has passed from when the first light source 111 starts to scan the laser, the second light source 113 can start to scan the laser. Conversely, after the second light source 113 starts to scan the laser, the first light source 111 can start to scan the laser.

The optical lenses 120a and 120b may contain collimating lenses 121a and 121b, respectively, changing the lasers scanned from the first light source 111 and the second light source 113 into lasers parallel with the laser axis or into a converging laser, and the cylindrical lenses 123a and 123b which convert the lasers passing through the collimating lenses 121a and 121b into a linear beam of the sub scanning direction. The beam then propagates onto the reflecting faces of the polygon mirror 130. The optical lenses 120a and 120b are provided as a plurality of lenses on the optical paths of the incident laser from each light source 111 or 113 to the polygon mirror 130.

The polygon mirror 130 is shown as having hexagonal reflecting faces, although an alternative mirror shape maybe used, according to design preferences. Also, the number of the reflecting faces may be adjusted as necessary. The polygon mirror 130 may be operated by a motor (not shown) rotating at a uniform speed.

The first F-θ lens 141 and the second F-θ lens 143 are positioned on the respective optical paths between the image forming part 160 and the polygon mirror 130 and converge the first laser and the second laser reflected from the polygon mirror 130 in the main scanning direction to be scanned onto the respective photosensitive bodies 160a and 160b within a predetermined range (see S to F in Figure 2).

The first F-θ lens 141 and the second F-θ lens 143 are preferably, but not necessarily, formed by injection-molded plastic material to enhance productivity and reduce manufacturing cost. Of course, other materials or methods may be employed, as desired. The first F-θ lens 141 and the second F-θ lens 143 are preferably, but not necessarily, disposed in an "up" and "down" orientation, respectively, with respect to the direction of the rotating axial line (perpendicular direction to the plane of Figure 2 at point P) in consideration of light source arrangement and space efficiency.

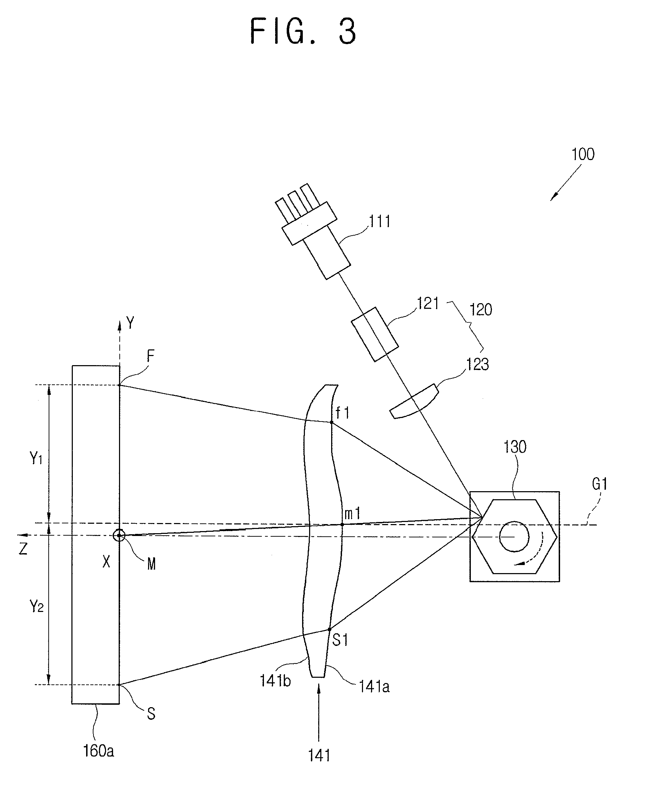

As shown in Figures 2 and 3, the first F-θ lens 141 and the second F-θ lens 143 contain incident faces 141a and 143a, respectively, which reflected lasers from the polygon mirror 130 enter and exiting faces 141b and 143b from which the lasers exit.

Hereinafter, a configuration of the incident face 141a and the exiting face 141b of the first F-θ lens 141 will be described.

As shown in Figure 3, it may be assumed that the polygon mirror 130 may rotate clockwise and a laser is scanned from the first light source 111. The laser passes through point s1 of the incident face 141a of the first F-θ lens 141 to converge onto starting point S within the scanning range of the image forming part 160a, and passes through lens centre m1 and point f1 of the incident face 141a which, respectively, converge to centre point M and end point F within the scanning range of the image forming part 160a. Here, the incident surface 141a and the exit surface 141b of the first F-θ lens 141 are bridged by centre point m1 of the incident surface 141a so that the starting point S and the ending point F can be asymmetrical with each other with respect to line G1 that is parallel to the centre line (Z axis). That is, the first F-θ lens 141 has an incident surface 141a and an exit surface 141b having a predetermined SAG value (the depth of a lens surface from a reference point) which makes an upper scanning range Y1 and a sub scanning range Y2 different from each other.

The SAG value of the incident surface 141a and the exit surface 141b of the first F-θ lens 141 may be formed, for example, by Formula 1 and a Table 1 as shown below:

[Formula 1]

$$z = \frac{C_1|y|^2}{1+\sqrt{1-(1+K)C_1^2|y|^2}} + \sum_{n=3}^{10} A_n|y|^2 + \frac{C_2\left(1+\sum_{n=3}^{10} B_n|y|^n\right)x^2}{1+\sqrt{1-C_2^2\left(1+\sum_{n=3}^{10} B_n|y|^n\right)^2 x^2}}$$

Here, "z" indicates the depth of the lens surface with respect to the light travelling direction, "y" indicates a lens coordinate of the main scanning direction, and "x" indicates a lens coordinate of a sub scanning direction. "C1" indicates a curvature of the main scanning direction, "C2" indicates a curvature of the sub scanning direction, and "K" indicates an aspheric coefficient. "An" and "Bn" indicate coefficient values which can be selected according to a desired condition, respectively.

| Incident face | | | | Exiting face | | | |
|---|---|---|---|---|---|---|---|
| Y>0 | | Y<0 | | Y>0 | | Y<0 | |
| C1 | | 7.51e-03 | | C1 | | -5.09e-04 | |
| K | 0.00e+00 | K | 0.00e+00 | K | 0.00e+00 | K | 0.00e+00 |
| A3 | 1.41e-04 | A3 | 1.58e-04 | A3 | 1.59e-04 | A3 | 1.74e-04 |
| A4 | 2.01e-05 | A4 | -2.10e-05 | A4 | -2.11 e-05 | A4 | -2.15e-05 |
| A5 | 1.10e-06 | A5 | 1.13e-06 | A5 | 1.25e-06 | A5 | 1.24e-06 |
| A6 | -3.65e-08 | A6 | -3.66e-08 | A6 | -4.71e-08 | A6 | -4.67e-08 |
| A7 | 7.10e-10 | A7 | 7.05e-10 | A7 | 1.15e-09 | A7 | 1.15e-09 |
| A8 | -7.56e-12 | A8 | -7.58e-12 | A8 | -1.84e-11 | A8 | -1.84e-11 |
| A9 | 3.66e-14 | A9 | 4.00e-14 | A9 | 1.75e-13 | A9 | 1.74e-13 |
| A10 | -4.74e-17 | A10 | -7.43e-17 | A10 | -7.68e-16 | A10 | -7.42e-16 |
| C2 | -5.36e-02 | C2 | -5.36e-02 | C2 | -7.82e-02 | C2 | -7.82e-02 |
| B3 | -2.01e-05 | B3 | -5.09e-05 | B3 | -1.05e-05 | B3 | -2.56e-05 |
| B4 | -7.45e-07 | B4 | 4.16e-07 | B4 | 2.72e-07 | B4 | 1.65e-06 |
| B5 | 8.23e-08 | B5 | 1.01e-07 | B5 | 1.66e-08 | B5 | -5.39e-08 |
| B6 | -1.61e-09 | B6 | -3.33e-09 | B6 | -1.23e-09 | B6 | 9.03e-10 |
| B7 | -1.61e-12 | B7 | 3.07e-11 | B7 | 3.19e-11 | B7 | -1.37e-12 |
| B8 | 2.35e-13 | B8 | 2.15e-14 | B8 | -2.01e-13 | B8 | -9.57e-14 |
| B9 | -2.63e-16 | B9 | -3.71e-17 | B9 | -5.02e-15 | B9 | -1.26e-15 |
| B10 | -6.09e-18 | B10 | -9.81e-18 | B10 | 6.87e-17 | B10 | 2.93e-17 |

As shown in figure 2, the second F-θ lens 143 has an optical characteristic that is symmetrical to the first F-θ lens 141 with respect to the centre line (Z axis). That is, the second F-θ lens 143, when rotated 180 degrees with respect to the centre line (Z axis), is optically symmetrical to the first F-θ lens 141.

As described above, the first F-θ lens 141 is manufactured to able to be used as the second F-θ lens 143, and conversely, the second F-θ lens 143 is designed so it can also be used as the first F-θ lens 141.

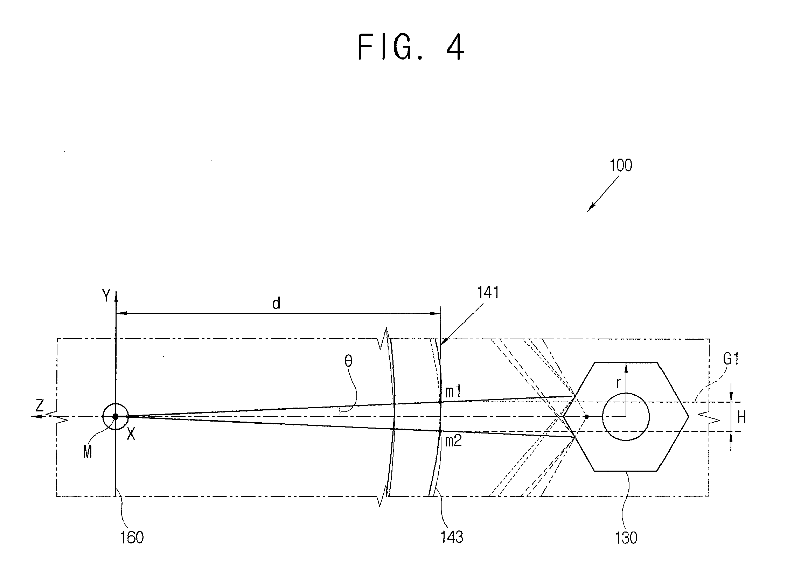

Here, as shown in Figures 2 and 4, the first F-θ lens 141 and the second F-θ lens 143 can be shifted as much as a predetermined offset amount H along the main scanning direction with respect to the centre line (Z axis). That is, the offset amount H between the lens centre (See m1 in Figure 2) of the first F-θ lens 141 and the lens centre (See m2 in Figures 2 and 4) of the second F-θ lens 143 exists within a range based on the following Formula 2:

$$[\text{Formula 2}]$$

$$2d\tan(\theta) \le H \le 2r\sin\left(\frac{180}{n}\right)$$

Here, "d" indicates a perpendicular distance from the lens centre m1 of the first F-θ lens 141 to the image forming part 160a, and "θ" indicates an angle between the line connecting the lens centre m1 of the first F-θ lens 141 with a reference position M of the image forming part 160a, and the centre line (Z axis). "r" indicates an inscribed circle radius of the reflecting faces of the polygon mirror 130, and "n" indicates the number of reflecting faces of the polygon mirror 130.

Although the laser scanning unit 100 is shown in figure 2 with light sources 111 and 113 positioned to scan the symmetrical lasers with respect to the centre line (Z axis), the opposite ends of the laser scanning range formed in the image forming part 160 may be coincident with each other since the second F-θ lens 143 has optical characteristics symmetrical to that of the first F-θ lens 141, with respect to the centre line (Z axis).

Accordingly, the second F-θ lens 143 does not need to be separately designed and manufactured. Rather, only the first F-θ lens 141 may be designed and manufactured and used as the second F-θ lens143, thereby reducing manufacturing costs.

Also, the light sources 111 and 113 may be positioned as shown in Figure 2, thereby enhancing space efficiency.

The laser scanning unit 100 may further contain an additional light source (not shown) which is symmetrical with at least one of the first laser and the second laser with respect to the centre line (Z axis), and scans an additional laser spaced along the rotating axial line (the line which passes the point P in Figure 2 and is perpendicular to the plane of Figure 2) of the polygon mirror 130, and an additional F-θ lens (not shown) positioned on an additional optical path between the image forming part 160 and the polygon mirror 130, as necessary.

The additional light source (not shown) scans the additional laser, which is symmetrical with one of the first laser or the second laser with respect to the centre line (Z axis) and onto the reflecting faces of the polygon mirror 130 spaced along the rotating axial line. The additional light source (not shown) may be provided as a plurality of light sources as necessary.

The additional F-θ lens (not shown) has an optical characteristic symmetrical to the first F-θ lens 141 or the second F-θ lens 142 with respect to the centre line (Z axis). The additional F-θ lens (not shown) may also be spaced from the first F-θ lens 141 or second F-θ lens 143 along the rotating axial line (perpendicular to the plane of Figure 2 at point P).

Accordingly, a plurality of light sources can be all positioned between the image forming part 160 and the polygon mirror 130, to improve the utilization of space.

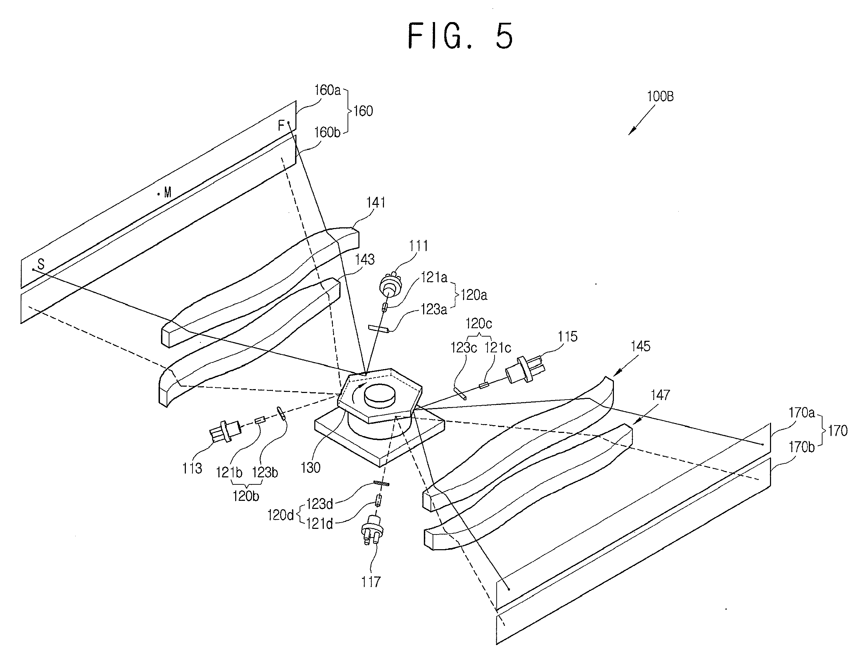

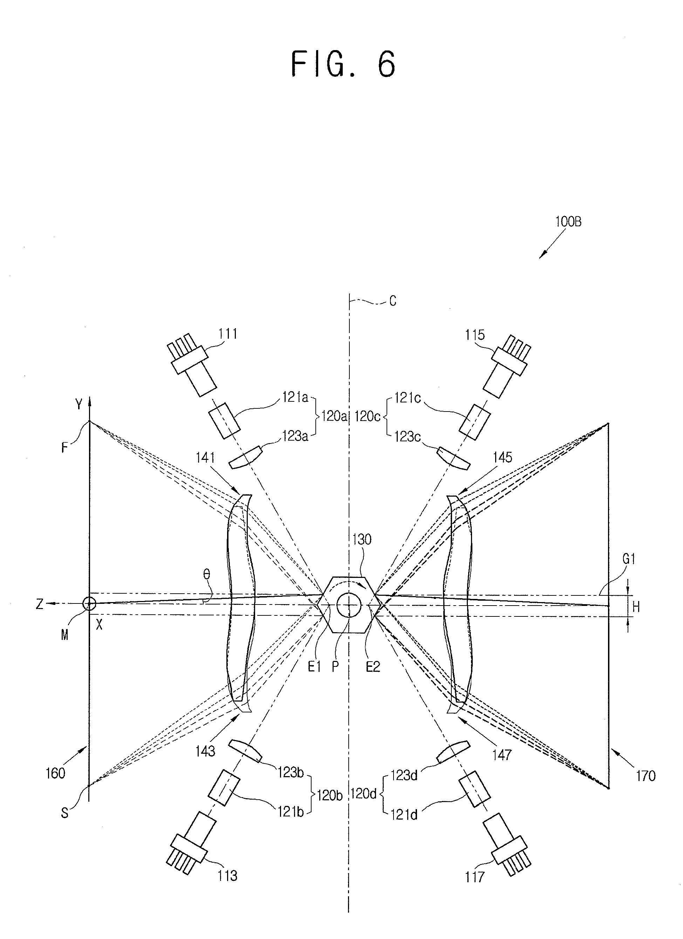

Further, as shown in Figures 5 and 6, another embodiment of the general inventive concept further contains a third light source 115 and a fourth light source 117 scanning a third laser and a fourth laser, respectively, symmetrical with the first laser and the second laser onto the reflecting faces of the polygon mirror 130, and a third F-θ lens 145 and a fourth F-θ lens 147 which are positioned between the polygon mirror 130 and an additional image forming part 170 facing the image forming part 160 across the polygon mirror 130 to form images corresponding to the respective lasers reflected by the polygon mirror 130 on the additional image forming part 170.

The third light source 115 and the fourth light source 117 scan the third laser and the fourth laser, respectively, toward a target position E2 that is symmetrical about a centre cross line (see C in Figure 6) with a target position E1 for the first laser and the second laser.

The third laser is symmetrical with the first laser with respect to the centreing cross line (see line C in Figure 6), which passes the rotating axial line of the polygon mirror 130 (point P in Figure 6 and is perpendicular to the plane of the figure) and is perpendicular to the centre line (Z axis). Likewise, the fourth laser is symmetrical with the second laser with respect to the centre cross line (line C in Figure 6).

The third and the fourth F-θ lenses, 145 and 147, respectively, converge the third laser and the fourth laser onto the additional image forming part 170a and 170b so as to have a scanning range corresponding to the scanning range scanned onto the image forming part 160a by the first laser.

The third F-θ lens 145 has an optical characteristic symmetrical with the first F-θ lens 141 with respect to the centre cross line (line C in Figure 6). That is, the third F-θ lens 145 may be obtained by rotating the first F-θ lens 141 by 180 degrees with respect to the centre cross line (line C in Figure 6).

The fourth F-θ lens 147 has an optical characteristic symmetrical with the second F-θ lens 143 with respect to the centre cross line (line C in Figure 6). That is, the fourth F-θ lens 147 may be provided by rotating the second F-θ lens 143 by 180 degrees with respect to the centre cross line (line C in Figure 6).

Any of the third light source 115 or the fourth light source 117 may be provided as necessary, and any F-θ lens may operate, with appropriate placement, as one of the corresponding F-θ lenses.

The laser scanning unit so configured, in which the light sources 111, 113, 115 and 117 are positioned to scan lasers symmetrical with respect to the centre line (Z axis) as shown in Figures 5 and 6, makes the opposite ends of the laser scanning range formed in the image forming part 160 and the additional image forming part 170 to coincide with each other in the main scanning direction.

Also, the second F-θ lens 143, the third F-θ lens 145, and the fourth F-θ lens 147 need not be separately designed and manufactured. Instead, the first F-θ lens 141 is designed, and manufactured as a plurality of lenses, to be used as the second through fourth F-θ lenses 143, 145, and 147, thereby reducing manufacturing costs.

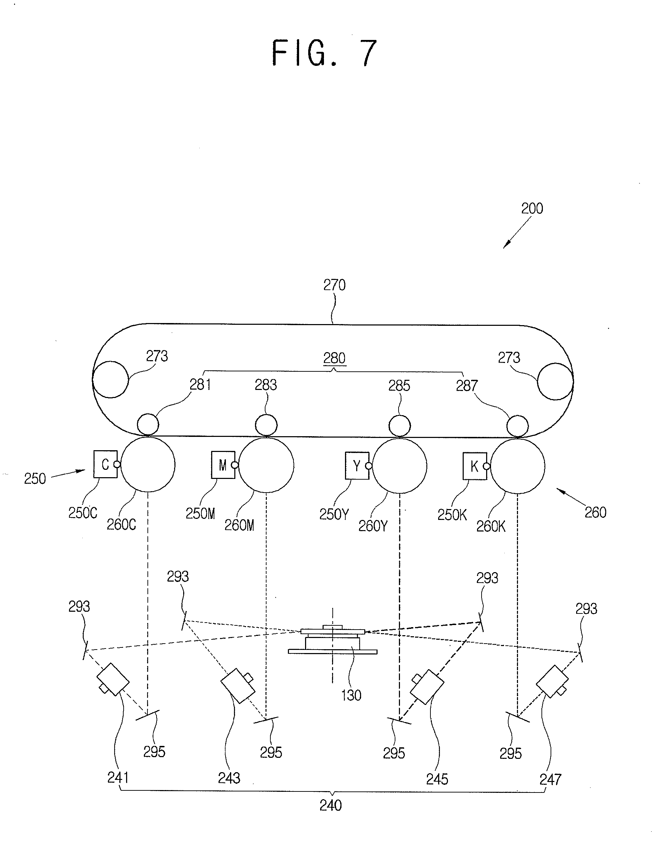

As shown in Figure 7, an image forming apparatus 200 according to another embodiment of the present general inventive concept contains a plurality of photosensitive bodies 260 in which electrostatic latent images are formed, a plurality of light sources (not shown) for scanning lasers to respectively expose the plurality of photosensitive bodies 260, a polygon mirror 130 for reflecting the laser scanned from the plurality of light sources (not shown) onto the respective photosensitive bodies 260, and a plurality of F-θ lenses 240 positioned on the respective optical paths between the polygon mirror 130 and the plurality of photosensitive bodies 260 to correspond with opposite ends of a scanning range of the laser scanned to the respective photosensitive bodies.

The image forming apparatus 200 may further contain a plurality of developing units 250 provided to respectively supply predetermined colored toners to the surfaces of the plurality of photosensitive bodies 260, a transfer belt 270 to which toner on the surfaces of the plurality of photosensitive bodies 260 is transferred, a transfer operating roller 273 operating the transfer belt 270, a plurality of transfer roller 280 transferring the toners on the surfaces of the plurality of photosensitive bodies to the transfer belt 270 by electrostatic attraction, a paper transfer roller (not shown) transferring the colored toner image ultimately formed on the transferring belt 270 to a printing paper, and a fixing roller (not shown) fixing the colored toner image transferred on the printing paper by heat and pressure.

A colored image forming apparatus of a single-pass type using toner of YMCK colors as an example of the image forming apparatus 200 according to another embodiment of the present general inventive concept will be described in detail.

The light source (not shown) is accommodated inside the main body casing (not shown), and scans laser onto the polygon mirror 130 in a manner similar to the light sources 111, 113, 115, and 117 as described above. The light source (not shown) maybe provided as four laser diodes which correspond to the colors of YMCK, respectively, or any combination thereof.

The first to fourth light sources (not shown) containing the four laser diodes may scan lasers corresponding to image information of a cyan color, a magenta color, a yellow color, and a black color onto the polygon mirror 130. Then, the first to fourth photosensitive bodies 260C, 260M, 260Y, and 260K are exposed to the lasers reflected from the polygon mirror 130, respectively, to form electrostatic latent images on the surfaces thereon.

The plurality of F-θ lenses 240 correspond to the first through fourth F-θ lenses 241, 243, 245, and 247, respectively, similar to the F-θ lenses 141, 143, 145, and 147 of Figures 5 - 6.

The developing unit 250 attaches a predetermined colored toner to the electrostatic latent images formed on the surfaces of the photosensitive bodies 260. As shown in figure 7, the developing unit 250 is provided as a plurality of developing units 250C, 250M, 250Y, and 250K to supply colored toner corresponding to the first through fourth photosensitive bodies 260C, 260M, 260Y, and 260K in which electrostatic latent images corresponding to predetermined colors are formed.

The plurality of photosensitive bodies 260 are provided as the first through fourth photosensitive bodies 260C, 260M, 260Y, and 260K in which the electrostatic latent images corresponding to a cyan color, a magenta color, a yellow color, and a black color are formed. Of course, other colors or variations thereof may be used, according to design preference.

Toner images attached to the surfaces of the plurality of photosensitive bodies 260C, 260M, 260Y, and 260K are transferred to the transfer belt 270 by the transfer roller 280. The toner images of cyan, magenta, yellow and black, which are formed on the first through fourth photosensitive bodies 260C, 260M, 260Y, and 260K are transferred to the transfer belt 270 by the transfer rollers 281, 283, 285, and 287, and overlapped each other to form an ultimate colored toner image.

The transfer roller 280 transfers the toner image attached to the electrostatic latent images on the surfaces of the respective photosensitive bodies 260C, 260M, 260Y, and 260K to the transfer belt 270 by electrostatic attraction, for example.

As shown in Figure 7, a plurality of reflection mirrors 293 and 295 are positioned in "front" of and "back" of each of the first through fourth F-θ lenses 241, 243, 245, and 247 to change the light path to a desired direction.

A paper transfer roller (not shown) transfers the ultimate colored toner image from the transfer belt 270 to the printing paper.

Hereinafter, an operating process of the colored image forming apparatus with the above-described configuration will be described.

In the case that the transfer belt 270 is operated counter-clockwise by the operating rollers 273, a first laser corresponding to the image information of a cyan color, for example, is first emitted from a first light source (not shown) and the emitted laser is changed into a converged laser by an optical lens (not shown). The converged laser is reflected onto the first F-θ lens 241 from the reflecting faces of the polygon mirror 130, and the reflected laser passes through the first F-θ lens 241 and the reflection mirrors 293 and 295 to be scanned onto the surface of the first photosensitive body 260C within a predetermined scanning range.

When the surface of the first photosensitive body 260C is exposed by the first laser and an electrostatic latent image corresponding to the image information of the cyan color is formed, toner of the cyan color is attached to the electrostatic latent image by the first developing unit 250C. Accordingly, a cyan colored toner image is formed on the surface of the first photosensitive body 260C.

Also, the cyan colored toner image formed in the first photosensitive body 260C is transferred to the transfer belt 270 by the transfer roller 281.

After a predetermined time after the cyan colored image information is exposed, a second laser corresponding to image information of the magenta color exits from the second light source (not shown), and passes through the polygon mirror 130, the second F-θ lens 243, and the corresponding reflection mirrors 293 and 295 to be scanned onto the surface of the second photosensitive body 260M. At this time, the scanning range of the laser scanned on the surface of the second photosensitive body 260M is positioned opposite to with the scanning range of the first laser for the first photosensitive body 260C.

An electrostatic latent image corresponding to the image information of the magenta color is formed on the surface of the second photosensitive body 260M exposed by the second laser, and the magenta-colored toner of a second developing unit 250M is attached to the electrostatic latent image of the second photosensitive body 260M by electrostatic attraction. Accordingly, on the surface of the second photosensitive body 260M is formed a magenta-colored toner image.

The magenta-colored toner image is transferred to the transfer belt 270 in which the cyan colored toner image has already been transferred by the transfer roller 283. It should be understood that a controller (not shown) controls the starting time for laser scanning of the light source, so that the magenta-colored toner image is transferred in the sub scanning direction to be matched with the cyan colored toner image pre-transferred to the transfer belt 270. The method for overlaying or matching colored toner images in the sub scanning direction is not discussed herein as it is well known technology.

In a similar manner, the yellow and black colored toner images are transferred to the transfer belt 270 and an ultimate colored image made up of YMCK colors is formed on the transfer belt 270. The colored toner image of the transfer belt 270 is transferred to a printing paper by the paper transfer roller (not shown), and a colored toner image transferred to a printing paper is fixed on the fixing roller (not shown), thereby forming a colored image on the printing paper.

Accordingly, although the respective colored toner images formed in the first through fourth photosensitive bodies 260C, 260M, 260Y, and 260K are overlapped with each other, they are not misaligned in the main scanning direction. Accordingly, the colored image which is formed by overlapping the respective colored toner images with one another is not distorted.

As is apparent from the above description, the laser scanning unit and the image forming apparatus having the laser scanning unit according to the present general inventive concept has numerous benefits, for example, a few of the benefits are described below.

First, a plurality of light sources and a plurality of image forming parts can be all positioned on one side, and the light source need not be limited in a specific position, thereby improving space efficiency. Accordingly, the laser scanning unit and the image forming apparatus can be compactly manufactured.

Second, because the F-θ lenses are similarly shaped, the F-θ lenses, for different sub images, need not be separately manufactured, thereby reducing manufacturing costs.

Third, because the F-θ lenses are similarly shaped, the assembly process can be simplified and the production can be standardized.

The general invention concept provides economic and size advantages over conventional laser scanning units. Accordingly, it should be appreciated that laser scanning units or implementations thereof, according to the general inventive concept described herein, may find use in printers, copiers, fax machines, and other forms of printing or duplication that are now known in the field as well as future developed systems.

Although a few embodiments of the present general inventive concept have been shown and described, it will be appreciated by those skilled in the art that changes may be made in these embodiments without departing from the principles of the general inventive concept, the scope of which is defined in the appended claims.

**Claims**

1. A scanning unit for an image forming apparatus comprising:

   a rotatable mirror having a plurality of reflecting surfaces arranged to reflect incident light onto an image forming means, said mirror being arranged to rotate about an axial line (P);
   a first light source arranged to emit a first light beam onto the reflecting surfaces at a predetermined scanning angle with respect to a centre line and a predetermined reference position on the image forming means, said centre line being arranged to pass through the mirror axial line (P);
   a second light source arranged to emit a second light beam onto the reflecting surfaces, the second light beam being arranged symmetrically to the first light beam with respect to the centre line;
   a first F-θ lens positioned on a first optical path of the first light beam between the image forming part and the mirror; and
   a second F-θ lens positioned on a second optical path of the second light beam between the image forming part and the mirror, the second F-θ lens having an optical characteristic symmetrical to the first F-θ lens with respect to the centre line (Z).

2. The scanning unit according to claim 1, wherein each scanning angle of the first light beam and the second light beam is an acute angle.

3. The scanning unit according to claim 1 or 2, wherein the first light beam and the second light beam are arranged to be scanned onto a target point (E1) disposed on the centre line and shifted by a predetermined distance from the rotating axial line toward the image forming part.

4. The scanning unit according to any of claims 1 to 3, wherein the first F-θ lens and the second F-θ lens are shifted a predetermined offset amount (H) along a main scanning direction from the centre line.

5. The scanning unit according to claim 4,
   wherein the predetermined offset amount H is within the range of the following formula:

$$2d\tan(\theta) \leq H \leq 2r\sin\left(\frac{180}{n}\right)$$

   where, "d" indicates a perpendicular distance between the lens centre and the image forming part, "θ" indicates an angle between a line connecting a lens centre with the reference position and the centre line, "r" indicates an inscribed circle radius of the reflecting surfaces of the mirror, and "n" indicates a number of the reflecting faces of the mirror, wherein said mirror is a polygon.

6. The scanning unit according to any preceding claim,
   wherein the first light beam and the second light beam are displaced from each other along a direction of the rotating axial line.

7. The scanning unit according to any preceding claim, further comprising:

   an additional light source which is arranged symmetrically with at least one of the first or the second light beams with respect to the centre line and which emits at least one additional light beam onto the reflecting surfaces, the additional light source being spaced from the first laser and/or second light beam along the rotating axial line; and
   an additional F-θ lens positioned on an additional optical path between the image forming part and the mirror, the additional F-θ lens has an optical characteristic symmetrical with the at least one of the first and second F-θ lens.

8. The scanning unit according to any of claims 1 to 6, further comprising:

   an additional light source symmetrically positioned to at least one of the first light source and the second light source with respect to a centre cross line passing through the axial line at a right angle to the centre line; and an additional F-θ lens positioned between the mirror and another image forming part, the another image forming part being symmetrically positioned with the image forming means with respect to the centre cross line, and the additional F-θ lens being arranged to be symmetrical with at least one of the first and second F-θ lens with respect to the centre cross line.

9. A laser scanning unit comprising:

a rotatable polygon mirror with a plurality of reflecting faces to reflect an incident light onto at least one image forming part;
at least one pair of light sources each corresponding to a respective image forming part to scan a pair of lasers onto the reflecting faces symmetrically to each other with respect to a centre line extending between a rotating axial line of the polygon mirror and a predetermined reference position on a respective one of the image forming parts; and
a pair of F-θ lenses corresponding to each pair of light sources, each F-θ lens being disposed along an optical path of a corresponding laser of the pair of lasers between the corresponding respective image forming part and the polygon mirror.

10. The laser scanning unit according to claim 9, wherein each pair of F-θ lenses are shifted a predetermined offset amount along a main scanning direction from the centre line.

11. The laser scanning unit according to claim 9 or 10, wherein
the at least one pair of light sources comprises two pairs of light sources, the first pair of light sources being disposed symmetrically to the second pair with respect to a line extending perpendicular to the centre line, and
the pair of F-θ lenses comprises two pairs of pair of F-θ lenses, each pair corresponding with a respective pair of light sources.

12. An image forming apparatus comprising a scanning unit according to any of claims 1 to 11.

FIG. 1
(PRIOR ART)

# FIG. 2

# FIG. 3

FIG. 4

FIG. 5

# FIG. 6

# FIG. 7

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | DE 199 61 502 A1 (RICOH KK [JP])<br>28 September 2000 (2000-09-28)<br>* figure 5 *<br>* abstract *<br>* column 9, line 33 - column 10, line 26 *<br>----- | 1-5,7-12<br><br>6 | INV.<br>H04N1/113<br>G02B26/12 |
| Y | US 2005/213177 A1 (ABE MASAAKI [JP])<br>29 September 2005 (2005-09-29)<br>* abstract *<br>* paragraph [0049] *<br>* figure 2 *<br>----- | 6 | |
| X | JP 58 105117 A (FUJITSU LTD)<br>22 June 1983 (1983-06-22)<br>* abstract *<br>* figures 5-7 *<br>----- | 1-4,9,<br>10,12 | |
| X | EP 1 619 033 A (BROTHER IND LTD [JP])<br>25 January 2006 (2006-01-25)<br>* abstract *<br>* paragraph [0036] - paragraph [0037] *<br>* figures 2,3 *<br>----- | 1,2,9,<br>10,12 | TECHNICAL FIELDS SEARCHED (IPC)<br><br>H04N<br>G02B |

The present search report has been drawn up for all claims

| Place of search | Date of completion of the search | Examiner |
|---|---|---|
| Munich | 21 September 2007 | Schenke, Cordt |

EPO FORM 1503 03.82 (P04C01)

## ANNEX TO THE EUROPEAN SEARCH REPORT
## ON EUROPEAN PATENT APPLICATION NO.

EP 07 10 9535

This annex lists the patent family members relating to the patent documents cited in the above-mentioned European search report.
The members are as contained in the European Patent Office EDP file on
The European Patent Office is in no way liable for these particulars which are merely given for the purpose of information.

21-09-2007

| Patent document cited in search report | | Publication date | Patent family member(s) | | Publication date |
|---|---|---|---|---|---|
| DE 19961502 | A1 | 28-09-2000 | US | 6288818 B1 | 11-09-2001 |
| US 2005213177 | A1 | 29-09-2005 | NONE | | |
| JP 58105117 | A | 22-06-1983 | JP | 1742154 C | 15-03-1993 |
| | | | JP | 4016766 B | 25-03-1992 |
| EP 1619033 | A | 25-01-2006 | CN | 1725056 A | 25-01-2006 |
| | | | CN | 2814442 Y | 06-09-2006 |
| | | | JP | 2006030912 A | 02-02-2006 |
| | | | US | 2006017996 A1 | 26-01-2006 |

EPO FORM P0459

For more details about this annex : see Official Journal of the European Patent Office, No. 12/82